# EUROPÄISCHE PATENTANMELDUNG

(11) **EP 3 203 132 A1**
(43) Veröffentlichungstag der Anmeldung: **09.08.2017**
(21) Anmeldenummer: 16153911.9
(22) Anmeldetag: 02.02.2016
(51) Int. Cl.: F16L 55/28

(54) **VORRICHTUNG FÜR ARBEITEN IM INNEREN UNBEGEHBARER ROHRE, ROHRNETZE, BEHÄLTER UND BAUWERKE MIT WECHSELBAREN ARBEITSWERKZEUGEN**

(71) Anmelder: Ims Ingenieurbüro GmbH, 01099 Dresden (DE)
(72) Erfinder: Bauer, Dipl.-Ing. Jens, 01465 Langebrück (DE); Hache, Thomas, 01239 Dresden (DE)
(74) Vertreter: Sperling, Thomas

(57) **Zusammenfassung**

Die Erfindung betrifft eine Vorrichtung (1) für Arbeiten im Inneren unbegehbarer Rohre, Rohrnetze, Behälter oder Bauwerke mit wechselbaren Arbeitswerkzeugen (4a, 4b), die im Inneren bewegbar ist, umfassend
• einen dreidimensional ausrichtbaren Arm (3) mit mindestens einer Aufnahme oder Befestigungsmöglichkeit (4) für verschiedene auswechselbare Arbeitswerkzeuge (4a, 4b) unterschiedlicher Funktion, die jeweils über mindestens eine Versorgungsleitung (23) mit Energie, Daten und/oder Material versorgt werden und durch mindestens eine dreidimensionale Ausrichtung des Arms (3) dreidimensional ausgerichtet und/oder dreidimensional positioniert werden können, um jeden beliebigen Punkt im Inneren von unbegehbaren Rohren, Rohrnetzen, Behältern oder Bauwerken auf jedem beliebigen Weg zu erreichen,
• einen oder mehrere Antriebe (13, 19), die für die dreidimensionale Ausrichtung des Arms (3) innerhalb des Inneren von unbegehbaren Rohren, Rohrnetzen, Behältern oder Bauwerken erforderlich sind,
• einen den Arm (3) sowie die Antriebe (13, 19) tragenden Korpus (2), in dem in Richtung einer Längsachse (7) des Korpus (2) ein durch den gesamten Korpus (2) und den Arm (3) und die Antriebe (13, 19) und einen gegebenenfalls vorhandenen Fahrantrieb (24) durchgehender, gegenüber dem Korpus (2), dem Arm (3), den Antrieben (13, 19) und dem gegebenenfalls vorhandenen Fahrantrieb (24) abgedichteter Kanal (8) für die mindestens eine Versorgungsleitung (23) angeordnet ist, der das Auswechseln der Arbeitswerkzeuge (4a, 4b) oder/und mindestens einer Versorgungsleitung (23) ermöglicht, ohne den Korpus (2) öffnen zu müssen, sowie mindestens eine Kamera zur Inspektion und/oder Beobachtung der Arbeiten im Rohrinneren.

## Beschreibung

Die Erfindung betrifft eine Vorrichtung für Arbeiten im Inneren unbegehbarer Rohre, Rohrnetze, Behälter und Bauwerke mit wechselbaren Arbeitswerkzeugen. Die Vorrichtung ist im Inneren unbegehbarer Rohre, Rohrnetze, Behälter und Bauwerke bewegbar und weist einen Arm auf, der mindestens ein auswechselbares Arbeitswerkzeug und eine Kamera trägt.

Um ein aufwändiges Aufgraben von Schadstellen in unbegehbaren Rohrleitungen, unter anderem in Abwasserleitungen, zu vermeiden, die beispielsweise durch Korrosion, Risse, Scherbenbrüche, undichte Muffen, Verkalkungen, Wurzeleinwuchs oder Ablagerungen verursacht sind, ist es bekannt, die Rohrleitungen vom Rohrinneren aus zu sanieren. Hierzu werden mittels einer im Rohr bewegbaren Vorrichtung die Schadstellen unter Beobachtung einer Videokamera beseitigt. Beispielsweise ist bekannt, diese Arbeiten durch ferngesteuerte Roboter vorzunehmen, die das Rohr selbstständig befahren oder die durch das Rohr gezogen werden.

Üblicherweise kann zur Positionierung der Kameraeinheit beziehungsweise Bearbeitungseinheit ein rohrförmiges Innengehäuse innerhalb eines im Leitungsrohr festgesetzten rohrförmigen, konzentrischen Außengehäuses um die Längsachse rotieren, wobei ein mit dem freien Ende des Innengehäuses verbundener Drehknopf mitgenommen wird, der seinerseits Mittel zum Verschwenken der Bearbeitungseinheit quer zur Längsachse besitzt.

Aus der DE 197 45 497 A1 ist eine Vorrichtung bekannt, die einen schwenkbaren Arm aufweist, der mindestens ein Bearbeitungswerkzeug und/oder eine Inspektionseinrichtung trägt und gegenüber der Rohrachse axial drehbar und radial schwenkbar ist. Die Vorrichtung ist von außen in das Rohrinnere zum Beispiel mittels einer Schiebestange verfahrbar und an beliebiger Stelle festlegbar. Koaxial zur Schwenkachse des Arms ist dabei ein hochübersetzendes Getriebe mit mindestens einer Hohlwelle angeordnet. Durch die Hohlwelle des hochübersetzenden Getriebes hindurch können Luft oder andere Medien oder elektrische Signal- und Versorgungsleitungen geführt werden, um Platz zu sparen und einen mechanischen Schutz für die Leitungen zu gewährleisten.

Auch die DE 100 35 221 A1 beschreibt eine Vorrichtung für Rohrinnenarbeiten in Rohren kleiner Nennweiten, die im Rohrinneren bewegbar und an beliebiger Stelle festsetzbar ist und die dem Bedarf an einer leistungsfähigen Vorrichtung mit guter Bogengängigkeit für Rohrinnenarbeiten in Rohren bis unterhalb einer Nennweite 100 mm bei gleichzeitig großer Kompaktheit und Robustheit relativ zur Leistung sowie Einfachheit im Aufbau und der Bedienung gerecht werden soll. Diese Vorrichtung weist einen Arm auf, der mindestens ein Bearbeitungswerkzeug und/oder eine Inspektionseinrichtung trägt und bezüglich der Rohrachse axial drehbar und radial schwenkbar ist. Dabei ist zum Schwenken des Armes koaxial zur Schwenkachse des Armes ein hochübersetzendes Hohlwellengetriebe angeordnet. In der Vorrichtung wird das Hohlwellengetriebe von einem Direktantriebsmotor angetrieben, der ebenfalls koaxial zur Schwenkachse des Arms angeordnet ist und mit dem Hohlwellengetriebe eine kompakte Antriebseinheit bildet. In einem Korpus der Vorrichtung ist auch ein hochübersetzendes Hohlwellengetriebe koaxial zur Drehachse des Armes für eine Rotation achsparallel zur Rohrachse angeordnet, welches von einem Direktantriebsmotor angetrieben wird, der ebenfalls koaxial zu dieser Drehachse angeordnet ist und mit dem Hohlwellengetriebe eine kompakte Antriebseinheit bildet. Durch die Hohlwellen der Hohlwellengetriebe hindurch können Luft und/oder andere Medien und/oder elektrische Signal- und Versorgungsleitungen geführt sein.

Neben mittels Schiebestangen, Seilzügen und an Seilen gezogenen Vorrichtungen sind auch selbstfahrende Vorrichtungen bekannt. So ist aus der DE 101 18 217 A1 ein System für Innenrohrarbeiten in kleinen Rohren mit Nenndurchmessern von DN 80 bis DN 200 bekannt, das sowohl für längere gerade Strecken als auch für Rohrstrecken mit 30 °- oder 45 °-Bögen sowie für kürzere Strecken mit Bögen größer 45 ° geeignet ist. Diese Vorrichtung besteht aus einem System aus einem Fahrwerk und einem Roboter für Innenrohrarbeiten, wie Inspizieren, Greifen, Reinigen, Fräsen, Schleifen, Bohren, Injizieren oder Spachteln. Dabei weist ein autarker, trajektionsloser Roboter einen Korpus und einen vom Korpus getragenen, zur Rohrachse dreh- und radialbeweglichen Arbeitskopf auf. An einem autarken, selbstfahrenden Fahrwerk sind endseitig Radpaare angeordnet. Bei diesem System bildet das Fahrwerk auf einer Stirnseite eine sich zwischen seine Radpaare erstreckende hohle Aufnahme aus, in die der Korpus des Roboters flanschartig einpassbar ist. Dabei sitzt der Korpus unbeweglich in der Aufnahme, wobei der Korpus und die Aufnahme zylindrisch oder prismatisch ausgebildet sind. Das Gehäuse des Fahrwerks kann rohrartig ausgebildet sein. Vom Ende der Aufnahme zur anderen Stirnseite verläuft ein Durchzug für Medien und Steuerleitungen. Der Arbeitskopf kann zum Korpus des Roboters dreh- und schwenkbeweglich sein. Zum Beispiel kann ein als Schwenkarm ausgebildeter Arbeitskopf um die Korpuslängsachse und damit um die Rohrachse drehbeweglich sein. Das System kann für längere gerade Strecken eingesetzt werden, indem der Roboter zur Selbstfahrt ertüchtigt wird und ebenso für Rohrstrecken mit Bögen größer 45°, indem der Fahrantrieb mit wenigen Handgriffen vom völlig autark arbeitenden, kompakten Roboter gelöst und durch eine Schiebestange oder ein Zugseil ersetzt wird.

Aus der DE 20 2014 105 354 U1 ist eine Vorrichtung zum Reinigen von Rohren bekannt, umfassend
- eine relativ zur Innenwand eines Rohrs in mindestens drei Achsen bewegbare Düse zur Erzeugung eines Strahls eines fluiden Reinigungsmediums auf einen beliebigen Punkt der Innenwand des Rohrs,
- einen an die Düse angeschlossenen Reinigungsschlauch für die Zufuhr des fluiden Reinigungsmediums, wobei die Düse an einem vorderen Endbereich des Reinigungsschlauchs angebracht ist und die Düse mit dem angeschlossenen Reinigungsschlauch entlang einer parallel zur Rohrachse verlaufenden Längsachse innerhalb des Rohrs eine axiale Bewegung ausführen kann,
- mindestens eine Schwenkeinrichtung für die Auslenkung der Düse in einem Winkel zur Längsachse, vorzugsweise zwischen 0° und ± 90°, unter Biegung des vorderen Endbereichs des Reinigungsschlauchs und von dessen Schlauchachse mit einer Biegungsrichtung in einer Biegungsebene,
- mindestens eine Einrichtung für die Auslenkung der Düse um die Längsachse durch Änderung der Biegungsrichtung und der Biegungsebene des vorderen Endbereichs um die Längsachse ohne Torsion des Reinigungsschlauchs, und
- mindestens eine Kamera für die Erfassung von Verschmutzungen und die Beobachtung der Auslenkung und Ausrichtung der Düse.

Ein Nachteil der oben genannten Geräte zur Bearbeitung der Innenwände von Rohren besteht darin, dass in der Regel für jede im Rohr zu erfüllende Aufgabe ein separates Gerät oder zumindest ein separater Geräteteil mit Antrieb und Kamera benötigt wird.

Die Aufgabe der Erfindung besteht darin, ein Gerät mit Antrieb und Kamera für den universellen Einsatz in Rohrleitungen unterschiedlichster Art für unterschiedlichste Aufgaben bereitzustellen. Lediglich die Arbeitsgeräte selbst und die Versorgungsleitungen für die Medien-, Daten- und/oder Energiezufuhr müssten dann ausgetauscht werden. Dabei soll eine Vorrichtung für die ferngesteuerte Verrichtung von Rohrinnenarbeiten verschiedener Art bereitgestellt werden, wobei im Rahmen der Erfindung unter Rohrinnenarbeiten nicht nur Innenarbeiten in Rohre im engeren Sinne, sondern auch in Kanälen und Hohlräumen aller Art verstanden werden sollen. Neben der Einsatzvielfalt sind eine Robustheit, Langlebigkeit und Betriebssicherheit weitere wichtige Anforderungen. Unter anderem soll das System als bogengängige Vorrichtung für Rohre mit kleinen Nennweiten, beispielsweise Nennweiten von DN 100 mm bis DN 200 mm auslegbar sein. Alternativ soll eine Ausbildung als selbstfahrende Vorrichtung möglich sein, insbesondere für die Anwendung in Rohren und Kanälen mit Nennweiten von DN 150 mm bis DN 800 mm. Die Vorrichtung soll dabei eine gezielte, punktgenaue Verrichtung der Rohrinnenarbeiten ermöglichen. Dafür ist eine gezielte dreidimensionale Ausrichtung und/oder dreidimensionale Positionierung des Arbeitswerkzeuges erforderlich.

Es ist insbesondere notwendig, dass die die Werkzeug-tragenden Teile der Vorrichtung in der Lage sind, hohe Kräfte aufzunehmen und hohe Drehmomente zu übertragen. Ein weiteres Ziel ist die Möglichkeit einer zentralen Medienzufuhr zu den Arbeitswerkzeugen, ein Schutz der Versorgungsleitungen vor Beschädigungen sowie die Vereinfachung des Tausches der Versorgungsleitungen bei Verschleiß.

Die Aufgabe der Erfindung wird durch eine Vorrichtung für Arbeiten im Inneren unbegehbarer Rohre, Rohrnetze, Behälter oder Bauwerke mit wechselbaren Arbeitswerkzeugen nach Anspruch 1 gelöst. Vorteilhafte Weiterbildungen sind in den Unteransprüchen angegeben.

Eine erfindungsgemäße Vorrichtung für Arbeiten im Inneren unbegehbarer Rohre, Rohrnetze, Behälter oder Bauwerke mit wechselbaren Arbeitswerkzeugen, die im Inneren bewegbar ist, umfasst
- einen dreidimensional ausrichtbaren Arm mit mindestens einer Aufnahme oder Befestigungsmöglichkeit für verschiedene auswechselbare Arbeitswerkzeuge unterschiedlicher Funktion, die jeweils über mindestens eine Versorgungsleitung mit Energie, Daten und/oder Material versorgt werden und durch mindestens eine dreidimensionale Ausrichtung des Arms dreidimensional ausgerichtet und/oder dreidimensional positioniert werden können, um jeden beliebigen Punkt im Inneren von unbegehbaren Rohren, Rohrnetzen, Behältern oder Bauwerken auf jedem beliebigen Weg zu erreichen,
- einen oder mehrere Antriebe, die für die dreidimensionale Ausrichtung des Arms innerhalb des Inneren von unbegehbaren Rohren, Rohrnetzen, Behältern oder Bauwerken erforderlich sind,
- einen den Arm sowie die Antriebe tragenden Korpus, in dem in Richtung einer Längsachse des Korpus ein durch den gesamten Korpus und den Arm und die Antriebe und einen gegebenenfalls vorhandenen Fahrantrieb durchgehender, gegenüber dem Korpus, dem Arm, den Antrieben und dem gegebenenfalls vorhandenen Fahrantrieb abgedichteter Kanal für die mindestens eine Versorgungsleitung angeordnet ist, der das Auswechseln der Arbeitswerkzeuge oder/und mindestens einer Versorgungsleitung ermöglicht, ohne den Korpus öffnen zu müssen, sowie
- mindestens eine Kamera zur Inspektion und/oder Beobachtung der Arbeiten im Rohrinneren.

In einer vorteilhaften Ausführungsform der Erfindung ist der Arm im Inneren eines Rohres dreidimensional ausrichtbar, indem er bezüglich der Rohrachse axial und radial beweglich sowie um die Rohrachse drehbar ausgebildet ist. Gemäß einer besonders bevorzugten Variante dieser Ausführungsform der Erfindung ist der Arm ein bezüglich der Rohrachse axial drehbarer und radial schwenkbarer Schwenkarm, wobei bei der axialen Drehung des Schwenkarms der Schwenkarm um das Arbeitswerkzeug vorzugsweise entweder drehbar ist oder eine Drehdurchführung zwischen zwei Abschnitten der mindestens einen Versorgungsleitung für das Arbeitswerkzeug vorgesehen ist, so dass keine Torsion der Versorgungsleitung erfolgt. Gemäß einer vorteilhaften Ausgestaltung dieser Ausführungsform umfasst der Antrieb oder gegebenenfalls die Mehrzahl der Antriebe eine Schwenkantriebseinrichtung und eine Drehantriebseinrichtung oder eine kombinierte Dreh- und Schwenkantriebsvorrichtung für das Drehen und Schwenken des Arms bezüglich der Rohrachse. Die mindestens eine Kamera zur Inspektion und/oder Beobachtung der Arbeiten im Rohrinneren kann zum Beispiel am Korpus oder am Arm befestigt sein.

Zur Gruppe der austauschbaren Arbeitswerkzeuge zählen vorzugsweise Düsen für fluide Reinigungsmedien und/oder Satelliteneinrichtungen für Arbeitswerkzeuge und/oder Spachtelwerkzeuge für einen Materialauftrag und/oder Laserschneidgeräte und/oder Greifer und/oder Zangen und/oder Kameras für Inspektionen und/oder Werkzeuge für Sanierungsaufgaben im Rohr und/oder Fräswerkzeuge, gegebenenfalls mit Antriebsmotor, und/oder Bürsten, gegebenenfalls mit biegsamen Wellen.

Durch die erfindungsgemäße Konzeption, insbesondere den durchgehenden Kanal durch das gesamte Gerät und die Positionierbarkeit und Ausrichtbarkeit der wechselbaren Arbeitseinsätze, steht ein Gerät mit Kamera für verschiedene Arbeitsaufgaben zur Verfügung. In Anbetracht der hohen Kosten für die erforderlichen Antriebe des Gerätes, zum Beispiel im Falle von Dreh- und Schwenkantriebseinrichtungen mit entsprechenden Dreh- und Schwenkachsen, bedeutet dies gleichzeitig eine enorme Kosteneinsparung bei der Anschaffung und Instandhaltung sowie bei der Ausbildung des Personals. Die Vorrichtung ist in der Lage, den Arm und damit das mindestens eine auswechselbare Arbeitswerkzeug und die mindestens eine Kamera in mindestens drei Dimensionen auszurichten. Dabei ist der Arm relativ zum durchgehenden Kanal um dessen verlängerte Längsachse vorzugsweise um mindestens 360° drehbar.

Die austauschbaren Arbeitswerkzeuge sind wegen der Rotationssymmetrie der Rohre vorzugsweise rotationssymmetrisch angeordnet. Vorteilhafterweise werden durch das Einbauen des Arbeitswerkzeuges und/oder seiner Versorgungsleitung die Öffnungen des durchgehenden Kanals und/oder des Arbeitswerkzeuges und/oder des Korpus und/oder der Antriebe und gegebenenfalls eines Fahrantriebes gegen Medien im Inneren des Rohres abgedichtet. Wegen der Rohrsymmetrie ist es vorteilhaft, dass die Versorgung der Arbeitseinsätze mit Energie oder Material durch die Mitte der Vorrichtung, das heißt durch den mittig im Korpusgehäuse achsparallel zur Rohrachse platzierten durchgehenden Kanal erfolgt.

Nach einer weiteren vorteilhaften Ausführungsform weist der Korpus vor dem Korpusgehäuse einen Armträger auf. Dieser Armträger kann mit einem um den durchgehenden Kanal und damit um die Längsachse drehbeweglichen Teil des Korpusgehäuses in einer Weise verbunden oder einteilig ausgebildet sein, dass eine Rotation des drehbeweglichen Teils des Korpusgehäuses um den durchgehenden Kanal des Korpusgehäuses zu einer Drehbewegung des Arms um die verlängerte Längsachse des durchgehenden Kanals führt.

Vorzugsweise ist zwischen dem Arm und dem durchgehenden Kanal des Korpus eine Drehdurchführung ausgebildet, wobei der Arm mittels dieser Drehdurchführung relativ zum durchgehenden Kanal des Korpus um die Längsachse rotierbar ist.

Gemäß einer bevorzugten Ausgestaltung der Vorrichtung sind die Antriebe relativ zum durchgehenden Kanal um die Längsachse drehbar ausgeführt. In einer entsprechenden Ausführungsform mit einer Schwenkantriebseinrichtung und einer Drehantriebseinrichtung als Antriebe für eine Positionierung und Ausrichtung des Arms kann ein Schwenkantriebsmotor der Schwenkantriebseinrichtung und ein Drehantriebsmotor der Drehantriebseinrichtung für die Rotation um die Längsachse längs parallel zueinander um den durchgehenden Kanal im Korpus angeordnet sein. Vorteilhafterweise sind dabei der Schwenkantriebsmotor der Schwenkantriebseinrichtung und der Drehantriebsmotor der Drehantriebseinrichtung um den ausgebildeten durchgehenden Kanal des Korpus um die Längsachse des durchgehenden Kanals drehbar. Vorzugsweise ist der durchgehende Kanal hohlzylindrisch ausgebildet.

Das System ist für Rohre, Kanäle und Hohlräume aller Art geeignet. Insbesondere kann das System als bogengängige Vorrichtung für Rohre mit kleinen Nennweiten, beispielsweise Nennweiten von DN 100 mm bis DN 200 mm ausgelegt sein. Ebenso kann die Vorrichtung auch lenkbar selbstfahrend ausgebildet sein, insbesondere für die Anwendung in Rohren und Kanälen mit Nennweiten von DN 150 mm bis DN 800 mm. Die Vorrichtung kann auch Räder zur Unterstützung einer axialen Bewegung der Vorrichtung aufweisen. Nach einer vorteilhaften Weiterbildung der Erfindung umfasst die Vorrichtung einen Fahrantrieb mit Rädern, der mit dem Korpus verbindbar ist, so dass zusammen mit dem Fahrantrieb eine axiale Bewegung des Korpus im Rohr erfolgen kann. Vorzugsweise ist entlang der Längsachse im Fahrantrieb ein Durchgangskanal ausgebildet, der bei Verbindung des Fahrantriebs mit dem Korpus an der hinteren Stirnseite des Korpusgehäuses die Verlängerung des durchgehenden Kanals des Korpus bildet. Vorzugsweise ist auch der Durchgangskanal hohlzylindrisch ausgebildet.

Die Erfindung ermöglicht es, ein und dieselbe Vorrichtung für Rohrinnenarbeiten in Rohren kleiner Nennweiten für längere gerade Strecken einzusetzen, indem er zur Selbstfahrt ertüchtigt wird und ebenso für Rohrstrecken mit 30°- oder 45°-Bögen sowie für kürzere Strecken mit Bögen größer 45°, indem der Fahrantrieb mit wenigen Handgriffen von der völlig autark arbeitenden, kompakten Vorrichtung gelöst und durch eine Schiebestange oder ein Zugseil ersetzt wird.

Nach einer weiteren Ausgestaltung der Erfindung weist die Vorrichtung eine radial im Rohr expandierbare Festsetzungseinheit auf, die bei maximaler Expansion eine Festsetzung der Vorrichtung durch Druck der Festsetzungseinheit an die Innenwand des Rohres ermöglicht. Eine solche Festsetzungseinheit ist zum Beispiel geeignet, dem durch den Strahl einer Düse als Arbeitswerkzeug verursachten Rückstoß beziehungsweise einer axialen Bewegung der Vorrichtung entgegenzuwirken. Gleichzeitig sind an der Festsetzungseinheit auch bei maximaler Expansion Aussparungen vorgesehen, die einen Abflussweg für ein Fluides Medium und für Verschmutzungen an der Vorrichtung vorbei, vorzugsweise zwischen Festsetzungseinheit und Innenwand des Rohrs, bereithalten.

Die erfindungsgemäße Vorrichtung ist vorzugsweise anwendbar für
- Hochdruckreinigungsarbeiten mit Wasser mit und ohne Abrasivmittel,
- Höchstdruckarbeiten bis 2000 bar Wasser,
- eine Satelliteneinrichtung für Reinigungsdüsen,
- Reinigungsverfahren mit Bürsten in Abwasserrohren, Lüftungsleitungen und Drainagen, das heißt biegsamen Wellen,
- Reinigungsarbeiten mit Hochdruck-Druckluft in der Lüftungstechnik,
- Inspektionen mit Schwenkkopfkamera mit Veränderung der Brennweite am Kameraobjektiv (Zoom) und automatischer Scharfstellung auf das Motiv (Autofokus),
- eine Satellitenkamera,
- Beschichtungen im Spritz- und Schleuderverfahren mit Harzen und Mörteln, partielle und kontinuierliche Spachtelarbeiten,
- Fräsarbeiten mit Luftdruck, Hochdruckwasserantrieb oder biegsamer Welle,
- Schneidarbeiten mit Laser per Lichtwellenleiter und
- für Arbeiten mit Wasserhydraulik zum Entfernen von Inlinern und Partlinern aus Rohren.

Entsprechend werden als Arbeitseinsätze am Arm vorzugsweise Düsen, Bürsten, Spachtelwerkzeuge, Laserschneidgeräte, aber auch Inspektionseinrichtungen wie Kameras eingesetzt. Durch den durchgehenden Kanal des Korpusgehäuses und gegebenenfalls durch den Durchgangskanal des Fahrantriebs als Verlängerung des durchgehenden Kanals hindurch können entsprechend der Anwendung Luft und/oder andere Medien, wie Wasser mit oder ohne Zusätze, und/oder elektrische Signal- und Versorgungsleitungen zum vorderen Teil des Arms und somit zu dem mindestens ein Arbeitswerkzeug geführt werden, wodurch die mechanische Beanspruchung der Leitungen insgesamt auf ein Minimum sinkt und Raum gespart wird.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- **Figur 1:**: den Korpus einer erfindungsgemäßen Vorrichtung mit einem Fräswerkzeug in der Seitenansicht, teilweise in schematischer Längsschnitt-Darstellung,
- **Figur 2:**: den Korpus einer erfindungsgemäßen Vorrichtung mit einer Düse in der Seitenansicht, teilweise in schematischer Längsschnitt-Darstellung und
- **Figur 3:**: ein Fahrwerk einer erfindungsgemäßen Vorrichtung als schematische Längsschnittdarstellung.

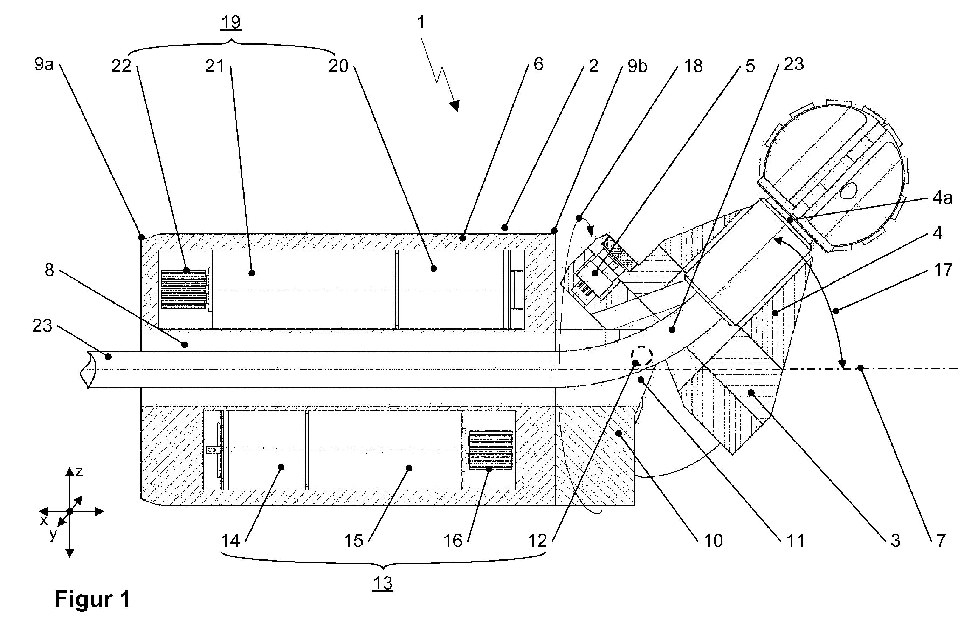

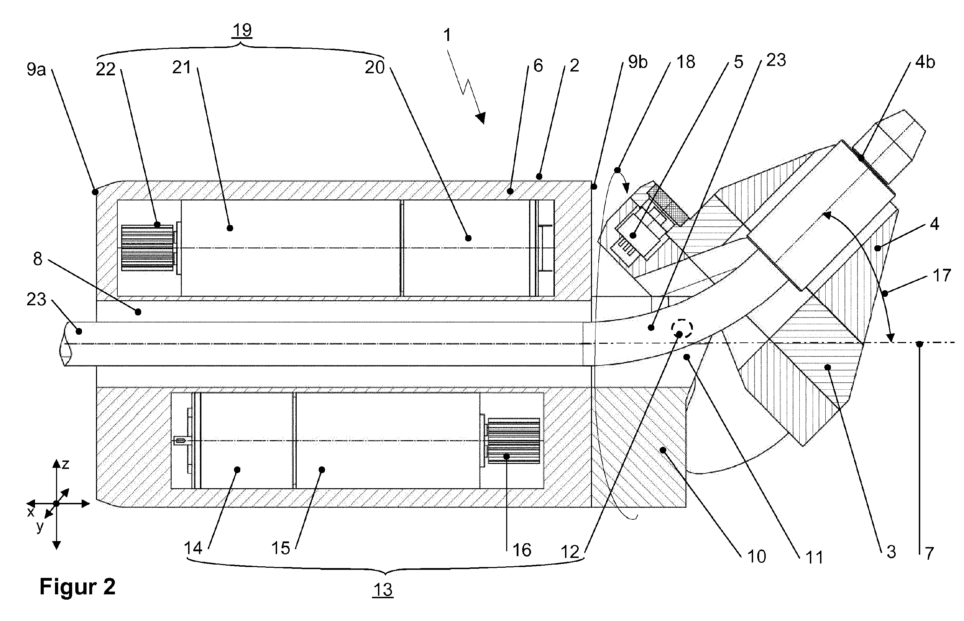

Die erfindungsgemäße Vorrichtung 1 besteht in den in **Figur 1** und **Figur 2** gezeigten Ausführungsformen im Wesentlichen jeweils aus einem Korpus 2 und einem als Schwenkarm ausgebildeten Arm 3. Sie kann mit Hilfe einer in den **Figuren 1** und **2** nicht dargestellten Festsetzungseinrichtung in einem nicht dargestellten Rohr festgesetzt werden, die gegebenenfalls am Korpus 2 befestigt ist. Der Arm 3 ist bezüglich der axialen Rohrachse radial und axial im Rohr beweglich und dreidimensional ausrichtbar, das heißt innerhalb eines dreiachsigen Koordinatensystems mit den senkrecht zueinander stehenden Achsen x-y-z ausrichtbar, dessen x-Achse parallel zur Rohrachse verläuft. Der Arm 3 weist eine Aufnahme 4 beziehungsweise Befestigungsmöglichkeit 4 für verschiedene auswechselbare Arbeitswerkzeuge 4a, 4b unterschiedlicher Funktion auf, die mit Hilfe des Arms ausrichtbar und/oder positionierbar sind. Gemäß der in der **Figur 1** gezeigten Ausführungsform ist ein Fräswerkzeug 4a als auswechselbares Arbeitswerkzeug 4a sowie eine Kamera 5 vorgesehen. Gemäß der in der **Figur 2** gezeigten Ausführungsform ist eine Düse 4b als auswechselbares Arbeitswerkzeug 4b sowie eine Kamera 5 vorgesehen. Die Kamera 5 befindet sich mit einer entsprechenden Beleuchtungseinrichtung jeweils im vorderen Bereich des Arms 3, während die Spitze des Arms 3 das Arbeitswerkzeug 4a, 4b trägt. Der Korpus 2 umfasst ein Korpusgehäuse 6 mit einem entlang einer Längsachse 7 achsparallel zur nicht dargestellten Rohrachse ausgerichteten, vorzugsweise mittig im Korpusgehäuse 6 platzierten, durchgehenden Kanal 8. Als durchgehender Kanal 8 wird hier ein zumindest von einer hinteren Stirnseite 9a zu einer vorderen Stirnseite 9b des Korpusgehäuses 6 durchgehender Kanal 8 bezeichnet. An einer vorderen, das heißt der zum Arm 3 gerichteten Stirnseite 9a des Korpusgehäuses 6 ist ein Trägerabschnitt 10 angebracht, der als tragender Teil des Korpus 2 für einen Armträger 11 fungiert, welcher direkt anschließend an den durchgehenden Kanal 8 entlang der Längsachse 7 positioniert ist. Am freien Ende des Armträgers 11 ist der bewegliche Arm 3 um eine in Figur 1 nicht sichtbare und daher gestrichelt angedeutete Schwenkachse 12 quer zur Längsachse 7 schwenkbar gelagert. Der Arm 3 lässt sich, angetrieben von einem im und/oder am Korpusgehäuse 6 platzierten Antrieb 13 in Form einer Schwenkantriebseinrichtung, welche gemäß dem Ausführungsbeispiele in den **Figuren 1** und **2** einen Schwenkantriebsmotor 14 in Form eines Gleichstrom-Getriebemotors 14 mit einem Getriebe 15 und einem Zahnrad 16 sowie weitere nicht gezeigte Übertragungselemente zwischen dem Schwenkantriebsmotor 14 und Schwenkachse 12 sowie die Schwenkachse 12 selbst umfasst, um einen Winkel von über 90° in beiden Schwenkrichtungen um die Schwenkachse 12 quer zur Rohrachse verstellen. In den **Figuren 1** und **2** ist jeweils eine Schwenkbewegung 17 in eine Schwenkrichtung des Arms 3 quer zur Rohrachse und zur Längsachse 7, nämlich nach oben, durch einen Pfeil 17 angezeigt.

Wie bereits beschrieben, umfasst der Korpus 2 ein Korpusgehäuse 6 mit einem durchgehenden Kanal 8 entlang der Längsachse 7. Dabei ist der Trägerabschnitt 10 als relativ zum Korpusgehäuse 6 drehbeweglicher Teil des Korpus 2 ausgebildet. Dieser Teil ist zusammen mit dem Armträger 11 relativ zum Korpusgehäuse 6, das den längsaxial ausgerichteten, hohlzylindrisch ausgebildeten durchgehenden Kanal 8 umfasst, um die Längsachse 7 vorzugsweise endlos drehbar ausgebildet. Die Rotation 18 des Armträgers 11 und des Arms 3 um die Längsachse 7 ist in den **Figuren 1** und **2** jeweils durch den Rotationspfeil 18 dargestellt. Durch die feste Verbindung des Armträgers 11 mit dem Arm 3 erfolgt auch eine Drehbewegung des Arms 3 mit dem Arbeitswerkzeug 4a, 4b und der Kamera 5 um die Längsachse 7. Die Drehung des beweglichen Teils 10 des Korpusgehäuses 6 mit dem Armträger 11 um die Längsachse 7 wird über eine Drehantriebseinrichtung 19 realisiert. Die Drehantriebseinrichtung 19 umfasst einen elektromotorischen Drehantriebsmotor 20 mit einem Getriebe 21 und einem Zahnrad 22, der im Korpusgehäuse 6 platziert beziehungsweise fest mit dem Korpusgehäuse 6 verbunden ist.

Die Rotation 18 des Trägerabschnitts 10 um die Längsachse 7 kann zum Beispiel durch die Rotation der Drehantriebseinrichtung 19 um den hohlzylindrisch ausgebildeten, durchgehenden Kanal 8 realisiert werden. Dabei ist die Vorrichtung derart ausgebildet, dass eine Drehung der Drehantriebseinrichtung 19 um den hohlzylindrischen, durchgehenden Kanal 8 zu einer Drehung der gesamten Schwenkantriebseinrichtung 13 um die Längsachse 7 führt. Durch eine Verbindung der Schwenkantriebseinrichtung 13 mit dem Arm 3 über den beweglichen Trägerabschnitt 10 und den Armträger 11 dreht sich der Arm 3 um die Längsachse 7.

Das auswechselbare Arbeitswerkzeug 4a, 4b wird jeweils über mindestens eine Versorgungsleitung 23 mit Energie, Daten oder Material versorgt. Im Falle des Fräswerkzeuges 4a gemäß **Figur 1** beinhaltet diese Versorgungsleitung 23 unter anderem ein elektrisches Kabel. Im Falle der Düse 4b gemäß **Figur 2** ist diese Versorgungsleitung 23 ein Versorgungsschlauch, der die Düse 4b mit einem fluiden Medium, zum Beispiel Wasser, versorgt.

Das System ist für Innenarbeiten in Rohren, Kanälen und Hohlräumen aller Art geeignet. Insbesondere kann das System als bogengängige Vorrichtung für Rohre mit kleinen Nennweiten, beispielsweise Nennweiten im Bereich von DN 100 mm bis DN 200 mm ausgelegt sein. Die Erfindung ermöglicht es, ein und dieselbe Vorrichtung für Rohrinnenarbeiten in Rohren kleiner Nennweiten für längere gerade Strecken einzusetzen, indem sie zur Selbstfahrt ertüchtigt wird und ebenso für Rohrstrecken mit 30°- oder 45°-Bögen sowie für kürzere Strecken mit Bögen größer 45 °. Ebenso kann die Vorrichtung auch lenkbar selbstfahrend für die Anwendung in Rohre und Kanälen mit größeren Nennweiten, zum Beispiel von DN 150 mm bis DN 800 mm ausgebildet sein. Die Vorrichtung 1 kann dazu mit einem Antriebsmodul gekoppelt oder mit einem Eigenantrieb ausgerüstet sein.

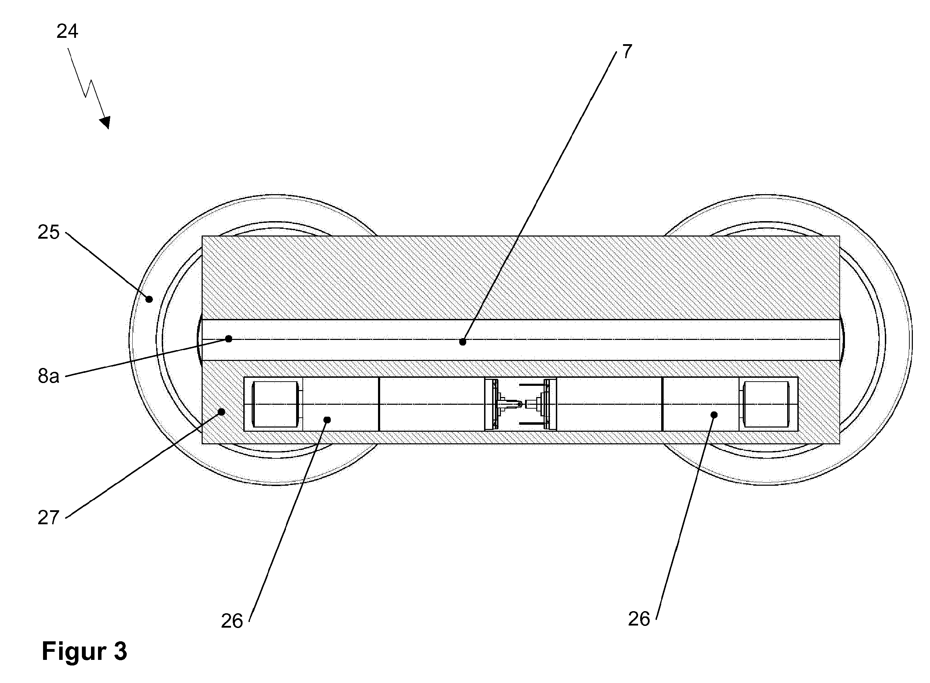

Die **Figur 3** zeigt den Längsschnitt A-A eines Fahrantriebs 24 als Einrichtung zur Unterstützung einer axialen Bewegung entlang der Achse innerhalb des zu reinigenden Rohrs, Kanals oder Hohlraumes, der hinter dem Korpus 2 der Vorrichtung 1, das heißt, an der hinteren Stirnseite 9a des Korpus 2 platziert wird (vgl. Fig. 1 und 2). Für längere Fahrstrecken muss die Vorrichtung 1 (Roboter) selbstfahrend sein. Der hierfür vorgesehene Fahrantrieb 24 hat an jedem Ende Radpaare 25, von denen mindestens ein Radpaar 25 einen Radantrieb 26 besitzt. Gemäß der **Figur 3** ist für jedes Radpaar 25 jeweils ein Radantrieb 26 vorgesehen. Der für betriebssicheres Fahren notwendige Radstand bestimmt die Länge des Fahrantriebs 24. Der Fahrantrieb 24 muss in der Lage sein, nicht nur Rohrmuffen oder ähnliche Hindernisse überfahren zu können, ohne hängen beziehungsweise steckenzubleiben, sondern auch Seiteneinläufe, da die Radpaare 25 nicht auf der Rohrsohle, sondern in Mündungshöhe der Seiteneinläufe auf der Rohrinnenschale laufen. Der Fahrantrieb umfasst neben den Radpaaren 25 ein Gehäuse 27, an welches die Radpaare angebracht sind und welches als Träger für den Radantrieb 26 dient. Mittig, entlang der Längsachse 7, ist im Fahrwagen des Fahrantriebs 24 ein hohlzylindrischer Durchgangskanal 8a ausgebildet. Dieser bildet bei der Verbindung von Korpus 2 und Fahrantrieb 24 die Verlängerung des hohlzylindrisch ausgebildeten, durchgehenden Kanals 8 gemäß Figur 1, durch den die Versorgungsleitungen 23 für das Arbeitswerkzeug 4a, 4b geführt sind. Die Versorgungsleitungen 23 werden durch den Durchgangskanal 8a und den durchgehenden Kanal 8 hindurch zum vorderen Teil und/oder zur Spitze des Armes 3 geführt, wodurch die mechanische Beanspruchung der Versorgungsleitungen insgesamt auf ein Minimum sinkt und Raum gespart wird.

### Bezugszeichenliste

- 1: Vorrichtung
- 2: Korpus
- 3: Arm
- 4: Aufnahme, Befestigungsmöglichkeit für ein auswechselbares Arbeitswerkzeug
- 4a: auswechselbares Arbeitswerkzeug, Fräswerkzeug
- 4b: auswechselbares Arbeitswerkzeug, Düse
- 5: Kamera
- 6: Korpusgehäuse
- 7: Längsachse der Vorrichtung 1 und des Fahrantriebes 24
- 8: durchgehender Kanal
- 8a: Durchgangskanal des Fahrantriebs 24, Verlängerung des durchgehenden Kanals 8 im Fahrantrieb 24
- 9a: hintere Stirnseite des Korpusgehäuses 6
- 9b: vordere Stirnseite des Korpusgehäuses 6
- 10: Trägerabschnitt, beweglicher Teil des Korpusgehäuses 2
- 11: Armträger
- 12: Schwenkachse
- 13: Antrieb, Schwenkantriebseinrichtung
- 14: Schwenkantriebsmotor, Getriebemotor
- 15: Getriebe
- 16: Zahnrad
- 17: Schwenkbewegung
- 18: Rotation, Rotationsbewegung, Rotationspfeil
- 19: Antrieb, Drehantriebseinrichtung
- 20: Drehantriebsmotor
- 21: Getriebe
- 22: Zahnrad
- 23: Versorgungsleitung
- 24: Fahrantrieb
- 25: Radpaar, Räder
- 26: Radantrieb
- 27: Gehäuse (des Fahrantriebs 24)

## Patentansprüche

1. Vorrichtung (1) für Arbeiten im Inneren unbegehbarer Rohre, Rohrnetze, Behälter oder Bauwerke mit wechselbaren Arbeitswerkzeugen (4a, 4b), die im Inneren bewegbar ist, umfassend
• einen dreidimensional ausrichtbaren Arm (3) mit mindestens einer Aufnahme oder Befestigungsmöglichkeit (4) für verschiedene auswechselbare Arbeitswerkzeuge (4a, 4b) unterschiedlicher Funktion, die jeweils über mindestens eine Versorgungsleitung (23) mit Energie, Daten und/oder Material versorgt werden und durch mindestens eine dreidimensionale Ausrichtung des Arms (3) dreidimensional ausgerichtet und/oder dreidimensional positioniert werden können, um jeden beliebigen Punkt im Inneren von unbegehbaren Rohren, Rohrnetzen, Behältern und Bauwerken auf jedem beliebigen Weg zu erreichen,
• einen oder mehrere Antriebe (13, 19), die für die dreidimensionale Ausrichtung des Arms (3) im Inneren von unbegehbaren Rohren, Rohrnetzen, Behältern oder Bauwerken erforderlich sind,
• einen den Arm (3) sowie die Antriebe (13, 19) tragenden Korpus (2), in dem in Richtung einer Längsachse (7) des Korpus (2) ein durch den gesamten Korpus (2) und den Arm (3) und die Antriebe (13, 19) und einen gegebenenfalls vorhandenen Fahrantrieb (24) durchgehender, gegenüber dem Korpus (2), dem Arm (3), den Antrieben (13, 19) und dem gegebenenfalls vorhandenen Fahrantrieb (24) abgedichteter Kanal (8) für die mindestens eine Versorgungsleitung (23) angeordnet ist, der das Auswechseln der Arbeitswerkzeuge (4a, 4b) oder/und mindestens einer Versorgungsleitung (23) ermöglicht, ohne den Korpus (2) öffnen zu müssen, sowie
• mindestens eine Kamera zur Inspektion und/oder Beobachtung der Arbeiten im Rohrinneren.

2. Vorrichtung nach Anspruch 1, **dadurch gekennzeichnet, dass** der Arm im Inneren eines Rohres (3) dreidimensional ausrichtbar ist, indem er bezüglich der Rohrachse axial und radial beweglich sowie um die Rohrachse drehbar ausgebildet ist.

3. Vorrichtung nach Anspruch 1 oder 2, **dadurch gekennzeichnet, dass** zur Gruppe der austauschbaren Arbeitswerkzeuge (4a, 4b) Düsen (4b) für fluide Reinigungsmedien und/oder Satelliteneinrichtungen für Arbeitswerkzeuge und/oder Spachtelwerkzeuge für einen Materialauftrag und/oder Laserschneidgeräte und/oder Greifer und/oder Zangen und/oder Kameras für Inspektionen und/oder Werkzeuge für Sanierungsaufgaben im Rohr und/oder Fräswerkzeuge (4a), gegebenenfalls mit Antriebsmotor, und/oder Bürsten, gegebenenfalls mit biegsamen Wellen, zählen.

4. Vorrichtung nach einem der Ansprüche 1 bis 3, **dadurch gekennzeichnet, dass** die austauschbaren Arbeitswerkzeuge (4a, 4b) rotationssymmetrisch angeordnet sind.

5. Vorrichtung nach einem der Ansprüche 1 bis 4, **dadurch gekennzeichnet, dass** die auswechselbare Versorgungsleitung ein Hochdruckschlauch für fluide Medien ist.

6. Vorrichtung nach Anspruch 4, **dadurch gekennzeichnet, dass** das austauschbare Arbeitswerkzeug (4a, 4b) eine Hochdruckdüse ist, die durch den Hochdruckschlauch mit fuiden Medien versorgt wird.

7. Vorrichtung nach einem der Ansprüche 1 bis 6, **dadurch gekennzeichnet, dass** durch das Einbauen des Arbeitswerkzeuges (4a, 4b) und/oder seiner Versorgungsleitung (23) die Öffnungen des durchgehenden Kanals (8), des Armes (3), des Korpus (2), der Antriebe (13, 19) und gegebenenfalls eines Fahrantriebes (24) gegen Medien im Inneren unbegehbarer Rohre, Rohrnetze, Behälter und Bauwerke abgedichtet werden.

8. Vorrichtung nach einem der Ansprüche 1 bis 7, **dadurch gekennzeichnet, dass** die Antriebe (13, 19), der Arm (3), die Aufnahme oder Befestigungsmöglichkeit (4) und das Arbeitswerkzeug (4a, 4b) relativ zum durchgehenden Kanal (8) um die Längsachse (7) drehbar sind.

9. Vorrichtung (1) nach einem der Ansprüche 1 bis 8, **dadurch gekennzeichnet, dass** zwischen dem Arm (3) und dem durchgehenden Kanal (8) des Korpus (2) eine Drehdurchführung ausgebildet ist.

10. Vorrichtung (1) nach einem der Ansprüche 1 bis 9, **dadurch gekennzeichnet, dass** diese einen Fahrantrieb (24) mit Rädern (25) umfasst, der mit dem Korpus (2) verbindbar oder mit diesem fest verbunden ist, so dass zusammen mit dem Fahranrieb (24) eine axiale Bewegung des Korpus (2) im Rohr erfolgen kann, und **dass** entlang oder parallel zur Längsachse (7) im Fahrantrieb (24) ein Durchgangskanal (8a) ausgebildet ist, der eine Verlängerung des durchgehenden Kanals (8) des Korpus (2) bildet.

11. Vorrichtung (1) nach einem der Ansprüche 1 bis 10, **dadurch gekennzeichnet, dass** der Kanal (8) achsgleich zur Längsachse (7) angeordnet ist.

## Geänderte Patentansprüche

### Geänderte Patentansprüche gemäss Regel 137(2) EPÜ.

1. Vorrichtung (1) für Arbeiten im Inneren unbegehbarer Rohre, Rohrnetze, Behälter oder Bauwerke mit wechselbaren Arbeitswerkzeugen (4a, 4b), die im Inneren bewegbar ist, umfassend
• einen ausrichtbaren Arm (3) mit mindestens einer Aufnahme oder Befestigungsmöglichkeit (4) für verschiedene auswechselbare Arbeitswerkzeuge (4a, 4b) unterschiedlicher Funktion, die jeweils über mindestens eine Versorgungsleitung (23) mit Energie, Daten und/oder Material versorgt werden,
• einen oder mehrere Antriebe (13, 19), die für die Ausrichtung des Arms (3) im Inneren von unbegehbaren Rohren, Rohrnetzen, Behältern oder Bauwerken erforderlich sind,
• einen den Arm (3) sowie die Antriebe (13, 19) tragenden Korpus (2), in dem in Richtung einer Längsachse (7) des Korpus (2) ein durch den gesamten Korpus (2) und den Arm (3) und die Antriebe (13, 19) und einen gegebenenfalls vorhandenen Fahrantrieb (24) durchgehender, gegenüber dem Korpus (2), dem Arm (3), den Antrieben (13, 19) und dem gegebenenfalls vorhandenen Fahrantrieb (24) abgedichteter Kanal (8) für die mindestens eine Versorgungsleitung (23) angeordnet ist, der das Auswechseln der Arbeitswerkzeuge (4a, 4b) oder/und mindestens einer Versorgungsleitung (23) ermöglicht, ohne den Korpus (2) öffnen zu müssen, sowie
• mindestens eine Kamera zur Inspektion und/oder Beobachtung der Arbeiten im Rohrinneren,
**dadurch gekennzeichnet, dass** der Arm mittels des oder der vom Korpus (2) getragenen Antriebe (13, 19) dreidimensional ausrichtbar ist und die auswechselbaren Arbeitswerkzeuge (4a, 4b) durch mindestens eine dreidimensionale Ausrichtung des Arms (3) dreidimensional ausgerichtet und/oder dreidimensional positioniert werden können, um jeden beliebigen Punkt im Inneren von unbegehbaren Rohren, Rohrnetzen, Behältern und Bauwerken auf jedem beliebigen Weg zu erreichen.

2. Vorrichtung nach Anspruch 1, **dadurch gekennzeichnet, dass** der Arm im Inneren eines Rohres (3) dreidimensional ausrichtbar ist, indem er bezüglich der Rohrachse axial und radial beweglich sowie um die Rohrachse drehbar ausgebildet ist.

3. Vorrichtung nach Anspruch 1 oder 2, **dadurch gekennzeichnet, dass** zur Gruppe der austauschbaren Arbeitswerkzeuge (4a, 4b) Düsen (4b) für fluide Reinigungsmedien und/oder Satelliteneinrichtungen für Arbeitswerkzeuge und/oder Spachtelwerkzeuge für einen Materialauftrag und/oder Laserschneidgeräte und/oder Greifer und/oder Zangen und/oder Kameras für Inspektionen und/oder Werkzeuge für Sanierungsaufgaben im Rohr und/oder Fräswerkzeuge (4a), gegebenenfalls mit Antriebsmotor, und/oder Bürsten, gegebenenfalls mit biegsamen Wellen, zählen.

4. Vorrichtung nach einem der Ansprüche 1 bis 3, **dadurch gekennzeichnet, dass** die austauschbaren Arbeitswerkzeuge (4a, 4b) rotationssymmetrisch angeordnet sind.

5. Vorrichtung nach einem der Ansprüche 1 bis 4, **dadurch gekennzeichnet, dass** die auswechselbare Versorgungsleitung ein Hochdruckschlauch für fluide Medien ist.

6. Vorrichtung nach Anspruch 4, **dadurch gekennzeichnet, dass** das austauschbare Arbeitswerkzeug (4a, 4b) eine Hochdruckdüse ist, die durch den Hochdruckschlauch mit fuiden Medien versorgt wird.

7. Vorrichtung nach einem der Ansprüche 1 bis 6, **dadurch gekennzeichnet, dass** durch das Einbauen des Arbeitswerkzeuges (4a, 4b) und/oder seiner Versorgungsleitung (23) die Öffnungen des durchgehenden Kanals (8), des Armes (3), des Korpus (2), der Antriebe (13, 19) und gegebenenfalls eines Fahrantriebes (24) gegen Medien im Inneren unbegehbarer Rohre, Rohrnetze, Behälter und Bauwerke abgedichtet werden.

8. Vorrichtung nach einem der Ansprüche 1 bis 7, **dadurch gekennzeichnet, dass** die Antriebe (13, 19), der Arm (3), die Aufnahme oder Befestigungsmöglichkeit (4) und das Arbeitswerkzeug (4a, 4b) relativ zum durchgehenden Kanal (8) um die Längsachse (7) drehbar sind.

9. Vorrichtung (1) nach einem der Ansprüche 1 bis 8, **dadurch gekennzeichnet, dass** zwischen dem Arm (3) und dem durchgehenden Kanal (8) des Korpus (2) eine Drehdurchführung ausgebildet ist.

10. Vorrichtung (1) nach einem der Ansprüche 1 bis 9, **dadurch gekennzeichnet, dass** diese einen Fahrantrieb (24) mit Rädern (25) umfasst, der mit dem Korpus (2) verbindbar oder mit diesem fest verbunden ist, so dass zusammen mit dem Fahranrieb (24) eine axiale Bewegung des Korpus (2) im Rohr erfolgen kann, und **dass** entlang oder parallel zur Längsachse (7) im Fahrantrieb (24) ein Durchgangskanal (8a) ausgebildet ist, der eine Verlängerung des durchgehenden Kanals (8) des Korpus (2) bildet.

11. Vorrichtung (1) nach einem der Ansprüche 1 bis 10, **dadurch gekennzeichnet, dass** der Kanal (8) achsgleich zur Längsachse (7) angeordnet ist.
